# EUROPÄISCHE PATENTSCHRIFT

(11) **EP 3 593 081 B1**
(45) Veröffentlichungstag und Bekanntmachung des Hinweises auf die Patenterteilung: **04.03.2026**
(21) Anmeldenummer: 18711306.3
(22) Anmeldetag: 13.03.2018
(51) Int. Cl.: F41G 7/00, G09B 9/00, F41A 33/00, F41G 3/26

(54) **SIMULATOR UND VERFAHREN ZUR SIMULATION EINES EINSATZES EINES FLUGKÖRPERS**
SIMULATOR AND METHOD FOR SIMULATING A DEPLOYMENT OF A MISSILE
SIMULATEUR ET PROCÉDÉ POUR SIMULER UNE UTILISATION D'UN MISSILE

(30) Priorität: 24.05.2017 DE 102017111476
(43) Veröffentlichungstag der Anmeldung: 15.01.2020
(73) Patentinhaber: Rheinmetall Electronics GmbH, 28309 Bremen (DE)
(72) Erfinder: CHRISTIANS, Ernst, 28309 Bremen (DE)
(74) Vertreter: HKW Intellectual Property PartG mbB
(86) Internationale Anmeldenummer: PCT/EP2018/056257
(87) Internationale Veröffentlichungsnummer: WO 2018/215104

(56) Entgegenhaltungen:
- EP-A1- 1 167 913
- WO-A1-02/084201
- US-A1- 2011 311 949

## Beschreibung

Die vorliegende Erfindung betrifft einen Simulator zur Simulation eines Einsatzes eines Flugkörpers eines angreifenden Systems in einem Gefechtsgelände. Ferner betrifft die vorliegende Erfindung ein Verfahren sowie ein Computerprogrammprodukt zur Simulation eines Einsatzes eines Flugkörpers eines angreifenden Systems in einem Gefechtsgelände.

Das technische Gebiet der vorliegenden Erfindung betrifft die Simulation ferngelenkter Flugkörper in einer realen Ausbildungsumgebung eines Gefechtsgeländes.

In der Ausbildung von Bedienern ferngelenkter Flugkörper bekannte Verfahren basieren auf einer virtuellen Simulation von Zielobjekten in einem Rechner mit einem bilderzeugenden System sowie auf einer laserbasierten Ausbildung im direkten Richten des Flugkörpers. Die virtuelle Simulation findet dabei weitgehend vollständig in einer von dem Rechner vorgegebenen simulierten Umgebung statt, insbesondere ohne unmittelbaren Bezug zu im Realen vorhandenen Zielobjekten, wie beispielsweise Panzern oder Lkws. Die laserbasierte Simulation nutzt im realen Geländeumfeld des Bedieners vorhandene, lasersensitiv instrumentierte Zielobjekte, welche in der Zielerfassung und Zielverfolgung durch ein im Lenkgerät des Bedieners vorhandenes optisches und/oder elektrisches Visier anvisiert und während der Flugphase des Flugkörpers verfolgt werden können.

Moderne Lenksysteme zeichnen sich dadurch aus, dass bildgebende Anteile der im Flugkörper verbauten elektronischen Zielerfassungskomponenten und Zielverfolgungskomponenten dem Bediener zumindest während der Flugphase des Lenkflugkörpers in sein Sichtmittel eingeblendet werden können. Unter bestimmten Voraussetzungen kann der Bediener sogar die Möglichkeit erhalten, in den Zielverfolgungsvorgang steuernd einzugreifen oder eine Bekämpfung ohne anfänglichen Zielkontakt aufzunehmen und die Zielzuweisung erst in der Flugphase des Lenkflugkörpers vorzunehmen.

Allerdings sind diese letzteren Möglichkeiten mit den oben erwähnten bekannten Verfahren in einer realen Ausbildungsumgebung nicht zu simulieren.

In der laserbasierten Simulation ist aus Sicherheitsgründen kein reales Abschießen des Flugkörpers zulässig, bei dem sich die bildgebenden Komponenten mit hoher Geschwindigkeit dem realen Zielobjekt nähern und dabei geeignete Bildsequenzen beim Flug liefern könnten. Zudem wäre dies auch keine wirtschaftlich sinnvolle Lösung, da ein solcher Flugkörper nach einer einzigen Verwendung mit sehr hoher Wahrscheinlichkeit zerstört wäre. Aufgrund der erforderlichen hohen Geschwindigkeiten von über 500 km/h verbietet sich auch die Lösung, hier eine mehrfach verwendbare Miniatur-Drohne einzusetzen.

In der virtuellen Simulation fehlt dagegen der Bezug zur echten Umgebung des Gefechtsgeländes. Dieser Bezug lässt sich grundsätzlich mittels einer kontinuierlichen Übertragung von Informationen über Position, Geschwindigkeit und Art der Zielobjekte sowie die bedienerseitigen Positions- und Zielrichtungsdaten herstellen. Hier ist jedoch einerseits zu berücksichtigen, dass sich in einer Ausbildungsumgebung, wie z. B. einem Gefechtsübungszentrum, in der Regel bis zu mehrere Hundert unterschiedliche potenzielle Ziele oder Zielobjekte befinden können. Eine quasi-kontinuierliche Übertragung aller relevanten Zieldaten und aller potenziell bekämpfenden Systeme erforderte extrem hohe Bandbreiten und würde damit mindestens die Kosten des Gefechtsübungszentrums der Ausbildungssysteme, insbesondere der Simulatoren, signifikant in die Höhe treiben.

Andererseits sind die technischen Möglichkeiten zur milliradian-genauen Ermittlung des Azimuts der Visierrichtung des Bedieners begrenzt, insbesondere bei dynamischen Vorgängen. Eine laserbasierte Simulation kann Genauigkeiten bis in den Submilliradianbereich hinein erreichen. Diese Genauigkeit ist jedoch auf ein von der Umgebung unabhängiges, eigenes Koordinatensystem beschränkt.

Hieraus ergeben sich die folgenden Probleme bei der Kopplung von laserbasierter und virtueller Simulation.

Zum einen fehlt die Kopplung des präzisen laserbasierenden Simulationsanteils, z. B. zu einem Weltkoordinatensystem, welches von virtuellen Simulationsrechnern als gemeinsames Bezugssystem verwendet werden könnte.

Zum anderen sind herkömmliche richtungsgebende Komponenten ungenau und zum Teil anfällig gegenüber Störgrößen. Die vermeintliche Richtung des virtuellen Anteils kann im Gradbereich von der tatsächlichen Ausrichtung des Visiers abhängen, wobei 1° Abweichung bei maximaler Reichweite von beispielsweise 4.000 m bereits 70 m links oder rechts des Zielobjektes bedeuten. Im Vergleich hierzu beträgt die Abweichung für einen Lasersimulator bei 4.000 m etwa 1 m.

Außerdem sind bei einem Übergang von laserbasierter zu virtueller Simulation Sprünge in der Visierlinie zu erwarten, die einen sinnvollen Einsatz in der Ausbildung tatsächlich herkömmlich sehr schwierig machen.

Wie dem Obigen zu entnehmen ist, lässt sich die Simulation eines Richtvorgangs, bei dem der Flugkörper zunächst ohne Zielbezug in eine grobe Richtung gestartet wird und dann während der Flugphase erst Ziele erfasst und verfolgt, mit vorhandenen technischen Mitteln einigermaßen brauchbar abbilden, da hier vorheriger Bezug zur realen Umgebung erforderlich ist und die technischen Abweichungen nicht so prägend zur Geltung kommen.

Die Druckschrift EP 1 167 913 A1 offenbart eine Simulation eines Abfeuerns in einem Feldübungssystem, umfassend eine oder mehrere Monitorvorrichtungen, zumindest eine Abschussrampe und zumindest ein Zielobjekt. Die Abschussrampe und die Zielobjekte sind dazu eingerichtet, ihre Ortsinformationen zu bestimmen und sie an zumindest eine Vorrichtung in dem System zu senden. Reale Bilder der Umgebung, die von einer mit der Abschussrampe verbundenen Kameravorrichtung übertragen werden, werden zumindest dem Benutzer der Abschussrampe zum Beobachten und Auswählen des Zielobjekts angezeigt. In einer Simulationsvorrichtung des Systems wird ein synthetisches Umgebungsbild mittels der in einem Speicher in der Simulationsvorrichtung gespeicherten Landschaftsinformationen und der Ortsinformationen über die Abschussrampe und das Zielobjekt erzeugt. Das zumindest dem Benutzer der Abschussrampe anzuzeigende Bild kann in ein synthetisches Umgebungsbild geändert werden, wenn der Benutzer der Abschussrampe ein simuliertes Geschoss abfeuert. In der Simulationsvorrichtung wird die Fortbewegung des zu simulierenden Geschosses berechnet und in einer oder mehreren Monitorvorrichtungen wird die Fortbewegung des Geschosses als synthetische Umgebungsbilder dargestellt.

Vor diesem Hintergrund besteht eine Aufgabe der vorliegenden Erfindung darin, die Simulation eines Einsatzes eines Flugkörpers in einem Gefechtsgelände zu verbessern.

Demgemäß wird eine Vorrichtung nach Anspruch 1 vorgeschlagen.

Vorteilhafterweise wird vorliegend die Genauigkeit des codierten Lasersignals genutzt, um dem Sichtmittel und damit der aktuellen Sichtdarstellung, insbesondere der aktuellen virtuellen Sichtdarstellung, möglichst präzise Daten zur Position des anvisierten, hier bestimmten Zielobjekts bereitstellen zu können. Der Kommunikationsaufwand und damit die notwendige zu übertragende Datenmenge ist vorteilhafterweise durch die Nutzung nur des gerichteten codierten Lasersignals und dessen Antwortsignals des bestimmten Zielobjekts sehr begrenzt. Dabei ist das Sichtmittel vorzugsweise dazu eingerichtet, auf Basis der zugesandten Daten des Antwortsignals eine virtuelle Simulation des Zielobjekts mit dem laserbasiert identifizierten Ziel zu synchronisieren.

Vorliegend kann der Simulator auch als Simulations-Einrichtung, als Simulationsvorrichtung oder als Flugkörpersimulator bezeichnet werden. Das Gefechtsgelände kann auch als Gefechtsübungs-Gelände oder Trainingsgelände bezeichnet werden. Die Speichervorrichtung umfasst insbesondere einen RAM-Speicher, einen ROM-Speicher und/oder einen EEPROM-Speicher. Das Gelände-Modell ist insbesondere ein virtuelles dreidimensionales Modell des vorliegenden Gefechtsgeländes. Das jeweilige Zielobjekt-Modell ist insbesondere ein dreidimensionales virtuelles Modell des jeweiligen Zielobjektes. Das Zielobjekt ist beispielsweise ein Panzer oder ein Lkw.

Die Sende-Einheit umfasst insbesondere einen laserbasierenden Anteil des Simulators oder Flugkörpersimulators. Die Zielobjekte sind vorzugsweise für die laserbasierende Simulation ausgerüstete Ziele.

Das Antwortsignal wird insbesondere über Funk übertragen. Das Antwortsignal umfasst vorzugsweise neben der Ortsinformation und der Typinformation des bestimmten Zielobjekts weitere, für die räumliche und zeitliche Synchronisation hilfreiche Informationen. Die Ortsinformation umfasst insbesondere eine Position in einem vorbestimmten Koordinatensystem, beispielsweise dem Weltkoordinatensystem. Die Ortsinformation umfasst damit insbesondere die Position des bestimmten Zielobjektes. Die Typinformation gibt insbesondere den Typ des bestimmten Zielobjekts an, beispielsweise den Typ eines bestimmten Panzers.

Das folgende Beispiel für eine Gefechtsübung kann die Wirkungsweise des vorliegenden Simulators illustrieren. Alle an der Gefechtsübung teilnehmenden Systeme, vorliegend das angreifende System sowie die Zielobjekte, verfügen mittels eines Ortungssystems, beispielsweise GPS, über ihre eigene Position in einem gemeinsamen Koordinatensystem. Die Sende-Einheit des Simulators, beispielsweise ausgebildet als der laserbasierende Anteil des Flugkörpersimulators, sendet während Zielerfassung und Zielverfolgung, insbesondere vor simuliertem Start des Flugkörpers, Lasercodes aus, die vom ebenfalls instrumentierten anvisierten Zielobjekt oder Zielsystem erfasst und ausgewertet werden. Diese Daten beinhalten insbesondere Informationen über die Identität, beispielsweise eine ID-Nummer, und die Waffenart des zielerfassenden, angreifenden Systems. Diese Daten können direkt oder in einem Gefechtsübungszentrum auch mit Vorrang per Datenfunk über eine Gefechts-Übungs-Zentrale übermittelt werden, welche über Angaben zu Typ und vorzugsweise aktueller Position und Bewegungsvektoren aller Übungsteilnehmer verfügt.

Anhand der Position des angreifenden Systems, das über seine ID-Nummer feststeht, und der des anvisierten Zielobjekts verfügt die Gefechts-Übungs-Zentrale über alle Daten, um potenzielle weitere Ziele entlang der Bezugslinie zwischen dem angreifenden System und dem bestimmten Zielobjekt zu ermitteln und deren Daten zusammen mit Angaben zum anvisierten Zielobjekt direkt an das angreifende System per Datenfunk als das Antwortsignal zu übermitteln.

Hierdurch wird deutlich, dass sich vorliegend die zu übertragende Datenmenge in erheblicher Weise reduziert. Zudem kann automatisch der Bezug zwischen dem relativen laserbasierenden Koordinatensystem und einem Weltkoordinatensystem hergestellt werden. Mit Abfeuerung des Flugkörpers kann das Sichtmittel auf eine virtuelle Sichtdarstellung umschalten, wobei auf Basis der zugesandten Daten des Antwortsignals die virtuelle Simulationsdarstellung mit dem laserbasiert identifizierten Ziel synchronisierbar ist.

Gemäß einer Ausführungsform ist das Sichtmittel dazu eingerichtet, eine reale Sichtdarstellung des Gefechtsgeländes sowie eine virtuelle Sichtdarstellung des Gefechtsgeländes auszugeben.

Damit ist das Sichtmittel vorteilhafterweise zur Kopplung von Live-Gefechtssimulation und virtueller Gefechtssimulation geeignet.

Gemäß einer weiteren Ausführungsform ist das Sichtmittel dazu eingerichtet, im Moment eines Abschießens des Flugkörpers von der realen Sichtdarstellung auf die virtuelle Sichtdarstellung umzuschalten.

Da bei einer Gefechtssimulation der Flugkörper tatsächlich nicht abgeschossen wird, wird vorliegend zum Zeitpunkt des Abschießens des Flugkörpers von der realen Sichtdarstellung auf die virtuelle Sichtdarstellung durch das Sichtmittel umgeschaltet.

Gemäß einer weiteren Ausführungsform umfasst das codierte Lasersignal die Identifikation des angreifenden Systems und eine Munitionsart des Flugkörpers des angreifenden Systems.

Gemäß einer weiteren Ausführungsform umfasst das Antwortsignal die Ortsinformation des bestimmten Zielobjekts, die Typinformation des bestimmten Zielobjekts und einen Bewegungsvektor des bestimmten Zielobjekts.

Gemäß einer weiteren Ausführungsform umfasst der Simulator eine Einstell-Einheit zum Einstellen einer Ausrichtung des angreifenden Systems in Abhängigkeit der Ortsinformation des Antwortsignals.

Damit kann das angreifende System, insbesondere der Flugkörper, auf das bestimmte Zielobjekt ausgerichtet werden. Folglich ist das bestimmte Zielobjekt genau in der Visierlinie des Flugkörpers.

Gemäß einer weiteren Ausführungsform ist die Einstell-Einheit dazu eingerichtet, die Ausrichtung des angreifenden Systems in Abhängigkeit von der Ortsinformation des Antwortsignals und einem Abgleich von geometrischen dreidimensionalen Daten aus dem Gelände-Modell mit Informationen zumindest einer dem angreifenden System zugeordneten bildgebenden Einrichtung einzustellen.

Gemäß einer weiteren Ausführungsform umfasst der Simulator zumindest eine bildgebende Einrichtung zum Aufnehmen zumindest eines Bilds des Gefechtsgeländes.

Gemäß einer weiteren Ausführungsform umfasst die zumindest eine bildgebende Einrichtung eine Tagsichtkamera, eine Wärmebildkamera und/oder einen Laserscanner.

Gemäß einer weiteren Ausführungsform umfasst der Simulator eine Bildverarbeitungs-Einheit zum Detektieren von signifikanten Punkten des bestimmten Zielobjekts in dem von der zumindest einen bildgebenden Einrichtung aufgenommen Bild.

Gemäß einer weiteren Ausführungsform ist die Empfangs-Einheit dazu eingerichtet, das Antwortsignal direkt von dem bestimmten Zielobjekt zu empfangen.

In diesem Ausführungsbeispiel wird das Antwortsignal beispielsweise per Funk direkt von dem bestimmten Zielobjekt an die Empfangs-Einheit und damit das angreifende System übertragen.

Gemäß einer weiteren Ausführungsform ist die Empfangs-Einheit dazu eingerichtet, das von dem bestimmten Zielobjekt gesendete Antwortsignal über eine Gefechts-Übungs-Zentrale zu empfangen.

Die Gefechts-Übungs-Zentrale verfügt insbesondere über Angaben zu Typ, aktueller Position und Bewegungsvektoren aller an der Gefechtsübung teilnehmenden Systeme. Die Gefechts-Übungs-Zentrale ist vorzugsweise dazu eingerichtet, anhand der Position des angreifenden Systems und der des anvisierten bestimmten Zielobjekts auch potenzielle weitere Zielobjekte entlang der Bezugslinie zwischen dem angreifenden System und dem bestimmten Zielobjekt zu ermitteln und deren Daten zusammen mit den Angaben zum anvisierten Zielobjekt an das angreifende System per Funk zu übermitteln.

Vorzugsweise werden dem angreifenden System zusätzliche Informationen über potenzielle Zielobjekte entlang der ermittelten Visierlinie zugesandt und dort in der virtuellen Simulation durch das Sichtmittel dargestellt.

Gemäß einer weiteren Ausführungsform werden Ergebnisse einer virtuellen Bekämpfung des bestimmten Zielobjekts per Datenfunk auf das reale Zielobjekt zurück übertragen.

Die jeweilige Einheit, zum Beispiel die Bereitstellungs-Einheit, kann hardwaretechnisch und/oder auch softwaretechnisch implementiert sein. Bei einer hardwaretechnischen Implementierung kann die Einheit als Vorrichtung oder als Teil einer Vorrichtung, zum Beispiel als Computer oder als Mikroprozessor, ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Des Weiteren wird ein Verfahren nach Anspruch 13 vorgeschlagen.

Die für den vorgeschlagenen Simulator beschriebenen Ausführungsformen und Merkmale gelten für das vorgeschlagene Verfahren entsprechend.

Weiterhin wird ein Computerprogrammprodukt gemäß Anspruch 14 vorgeschlagen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild eines ersten Ausführungsbeispiels eines Simulators zur Simulation eines Einsatzes eines Flugkörpers eines angreifenden Systems in einem Gefechtsgelände;
- Fig. 2: zeigt schematisch ein erstes Beispiel eines Gefechtsgeländes mit einem Simulator nach Fig. 1;
- Fig. 3: zeigt schematisch ein Beispiel eines von einer Sende-Einheit des Simulators nach Fig. 1 gesendeten codierten Lasersignals;
- Fig. 4: zeigt schematisch ein Beispiel eines von einer Empfangs-Einheit des Simulators nach Fig. 1 empfangen Antwortsignals auf das codierte Lasersignal;
- Fig. 5: zeigt ein schematisches Blockschaltbild eines zweiten Ausführungsbeispiels eines Simulators zur Simulation eines Einsatzes eines Flugkörpers eines angreifenden Systems in einem Gefechtsgelände;
- Fig. 6: zeigt schematisch ein zweites Beispiel eines Gefechtsgeländes mit einem Simulator nach Fig. 1 oder nach Fig. 5; und
- Fig. 7: zeigt ein schematisches Ablaufdiagramm eines Ausführungsbeispiels eines Verfahrens zur Simulation eines Einsatzes eines Flugkörpers eines angreifenden Systems in einem Gefechtsgelände.

In den Figuren sind gleiche oder funktionsgleiche Elemente mit denselben Bezugszeichen versehen worden, sofern nichts anderes angegeben ist.

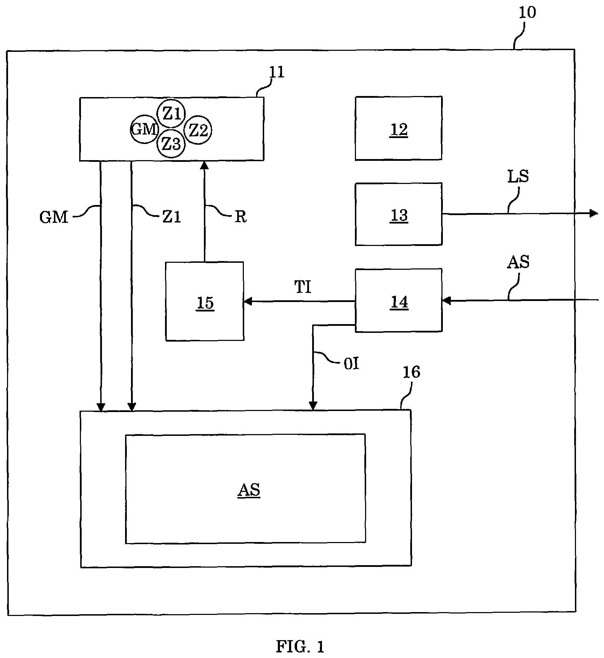

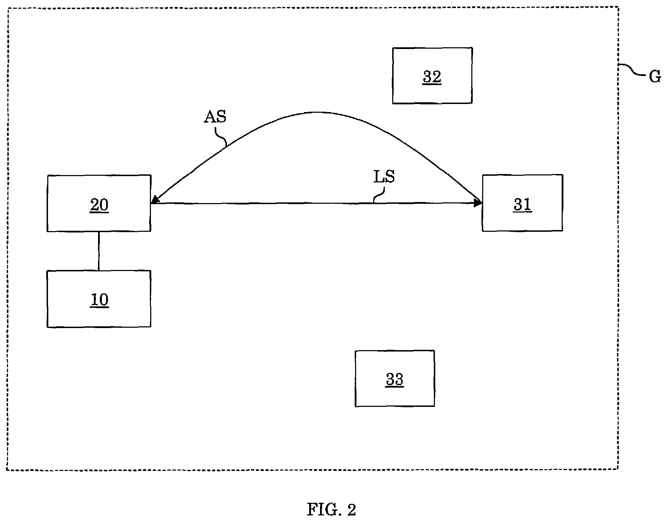

In Fig. 1 ist ein schematisches Blockschaltbild eines ersten Ausführungsbeispiels eines Simulators 10 (Fig. 2) zur Simulation eines Einsatzes eines Flugkörpers eines angreifenden Systems 20 in einem Gefechtsgelände G dargestellt.

Das erste Ausführungsbeispiel des Simulators 10 der Fig. 1 wird unter Bezugnahme auf die Fig. 2 - 5 näher erläutert. Dabei zeigt die Fig. 2 ein erstes Beispiel des Gefechtsgeländes G mit dem Simulator 10 nach Fig. 1.

Der Simulator 10 ist gemäß Fig. 2 mit einem angreifenden System 20 gekoppelt oder verbunden. Das angreifende System 20 umfasst einen Flugkörper, vorzugweise einen Lenk-Flugkörper, beispielsweise zur Panzer- oder Flugabwehr. In dem Gefechtsgelände G befinden sich beispielhaft drei Zielobjekte 31 - 33. Ohne Einschränkung der Allgemeinheit sind in dem Gefechtsgelände G nur drei Zielobjekte 31 - 33 dargestellt. Das jeweilige Zielobjekt 31 - 33 kann beispielsweise ein gegnerischer Panzer, ein gegnerischer Lkw, ein Helikopter oder dergleichen sein.

Der Simulator 10 der Fig. 1 umfasst eine Speichervorrichtung 11, eine Erfassungs-Einheit 12, eine Sende-Einheit 13, eine Empfangs-Einheit 14, eine Bereitstellungs-Einheit 15 sowie ein Sichtmittel 16.

Die Speichervorrichtung 11 ist dazu eingerichtet, ein Gelände-Modell GM des Gefechtsgeländes G, beispielsweise nach Fig. 2, und eine Anzahl von Zielobjekten-Modellen Z1 - Z3 der Zielobjekte 31 - 33 zu speichern. Insbesondere ist das jeweilige Zielobjekt-Modell Z1 - Z3 ein dreidimensionales virtuelles Zielobjekt-Modell, welches als elektronische Datei in der Speichervorrichtung 11 ablegbar ist und als virtuelle Darstellung in dem Sichtmittel 16 darstellbar ist. Die Speichervorrichtung 11 umfasst beispielsweise einen RAM-Speicher, einen ROM-Speicher und/oder einen EEPROM-Speicher.

Die Erfassungs-Einheit 12 ist insbesondere dem angreifenden System 20 zugeordnet und dazu eingerichtet, ein bestimmtes Zielobjekt, beispielsweise das Zielobjekt 31, der Zielobjekte 31 - 33, die sich in dem Gefechtsgelände G befinden, zu erfassen und zu verfolgen. Hierzu umfasst die Erfassungs-Einheit 12 insbesondere eine Tracking-Einheit (nicht dargestellt).

Die Sende-Einheit 13 ist insbesondere dem angreifenden System 20 zugeordnet und dazu eingerichtet, ein codiertes Lasersignal LS (siehe Fig. 1 und Fig. 2) an das bestimmte Zielobjekt 31 zu senden. Hierzu umfasst die Sende-Einheit 13 insbesondere einen Laser, der auf das bestimmte Zielobjekt 31 ausgerichtet werden kann und mittels dem das codierte Lasersignal LS direkt an das bestimmte Zielobjekt 31 übermittelt wird. Das jeweilige Zielobjekt 31 - 33 ist derart instrumentiert, um den codierten Laserstrahl zu erfassen und auswerten zu können.

Der Simulator 10 ist insbesondere zur Simulation einer Gefechtsübung in dem Gefechtsgelände G eingerichtet. Alle an der Gefechtsübung teilnehmenden Systeme, mit Bezug zu Fig. 2 das angreifende System 20 sowie die Zielobjekte 31 - 33, verfügen insbesondere mittels eines Ortungssystems, beispielsweise GPS, über ihre eigene Ortsinformation bzw. Position in einem gemeinsamen Koordinatensystem.

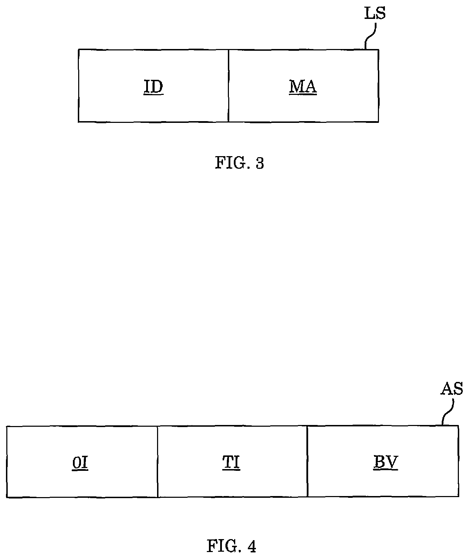

Das codierte Lasersignal LS umfasst zumindest eine Identifikation ID des angreifenden Systems 20. Mit Bezug zu Fig. 3 umfasst das codierte Lasersignal LS neben der Identifikation ID des angreifenden Systems 20 auch eine Information zur Munitionsart MA des Flugkörpers des angreifenden Systems 20.

Die Empfangs-Einheit 14 des Simulators 10 ist insbesondere dem angreifenden System 20 zugeordnet und dazu eingerichtet, ein von dem bestimmten Zielobjekt 31 als Antwort auf das Lasersignal LS gesendetes Antwortsignals AS zu empfangen. In dem Beispiel der Fig. 2 ist die Empfangs-Einheit 14 dazu eingerichtet, das Antwortsignal AS direkt von dem bestimmten Zielobjekt 31 zu empfangen. Zur Übertragung des Antwortsignals AS wird vorzugsweise eine Funkübertragung eingesetzt.

Das von dem bestimmten Zielobjekt 31 übertragene Antwortsignal AS umfasst zumindest eine Ortsinformation OI (oder Position) des bestimmten Zielobjekts 31 sowie eine Typinformation TI des bestimmten Zielobjekts 31. Mit Bezug zu Fig. 4 umfasst das Antwortsignal AS neben der Ortsinformation OI des bestimmten Zielobjekts 31 und der Typinformation TI des bestimmten Zielobjekts 31 einen Bewegungsvektor BV des bestimmten Zielobjekts 31. Die Ortsinformation OI umfasst beispielsweise GPS-Koordinaten des bestimmten Zielobjekts 31, welches beispielsweise als gegnerischer Panzer ausgebildet ist. Die Typinformation TI des bestimmten Zielobjekts 31 bezeichnet den Typ des Zielobjekts 31 und damit vorliegend beispielhaft einen bestimmten Panzertyp. Der Bewegungsvektor BV des bestimmten Zielobjekts 31 gibt Bewegungen und vorzugsweise Geschwindigkeiten des bestimmten Zielobjekts 31 in dem Gefechtsgelände G wieder.

Die Bereitstellungs-Einheit 15 des Simulators 10 ist dazu eingerichtet, ein in der Speichervorrichtung 11 gespeichertes Zielobjekt-Modell Z1 für das bestimmte Zielobjekt 31 in Abhängigkeit von zumindest der Typinformation TI des empfangenen Antwortsignals AS bereitzustellen. Mit anderen Worten nutzt die Bereitstellungs-Einheit 15 die empfangene Typinformation TI des Antwortsignals AS dazu, das Zielobjekt-Modell Z1, welches dem bestimmten Zielobjekt 31 zugeordnet ist und in der Speichervorrichtung 11 abgelegt ist, mittels einer Anfrage R aus der Speichervorrichtung 11 zu laden und dem Sichtmittel 16 zur Ausgabe bereitzustellen.

Das Sichtmittel 16 umfasst insbesondere eine Anzahl von Bildschirmen und/oder Monitoren und ist zur Ausgabe einer aktuellen Sichtdarstellung des Gefechtsgeländes G unter Verwendung des Gelände-Modells GM, des bereitgestellten Zielobjekt-Modells Z1 und der Ortsinformation OI aus dem Antwortsignal AS eingerichtet. Insbesondere ist die aktuelle Sichtdarstellung, die von dem Sichtmittel 16 ausgegeben wird, eine virtuelle dreidimensionale Darstellung des Gefechtsgeländes G mit einem dreidimensionalen virtuellen Modell des bestimmten Zielobjekts 31 und der relevanten Ortsinformationen bzw. Positionen zumindest des angreifenden Systems 20 und des bestimmten Zielobjekts 31, und vorzugsweise der weiteren Zielobjekte 32 und 33.

Vorzugsweise ist das Sichtmittel 16 dazu eingerichtet, sowohl eine reale Sichtdarstellung des Gefechtsgeländes G als auch eine virtuelle Sichtdarstellung des Gefechtsgeländes G auszugeben. Insbesondere schaltet das Sichtmittel 16 im Moment eines virtuellen Abschießens des Flugkörpers von der realen Sichtdarstellung auf die virtuelle Sichtdarstellung um. Ein Grund für dieses Umschalten zwischen realer Sichtdarstellung und virtueller Sichtdarstellung im Moment des Abschießens liegt darin, dass in der realen Gefechtsübung der Flugkörper tatsächlich nicht abgeschossen wird, sondern dieses Abschießen nur simuliert wird. Alle weiteren Daten des Flugkörpers, insbesondere nach dem Abschießen des Flugkörpers, werden simuliert. Insbesondere umfasst ein Flugkörper eine Anzahl von Kameras, beispielsweise eine Tagsichtkamera, eine Wärmebildkamera und/oder einen Laserscanner. Die Daten dieser Kameras werden vor dem Abschießen real durch das Sichtmittel 16 dargestellt, wohingegen diese Daten nach dem Abschießen auf der Basis des Geländemodells GM, der Zielobjekt-Modelle Z1 - Z3, des codierten Lasersignals LS und des Antwortsignals AS simuliert werden.

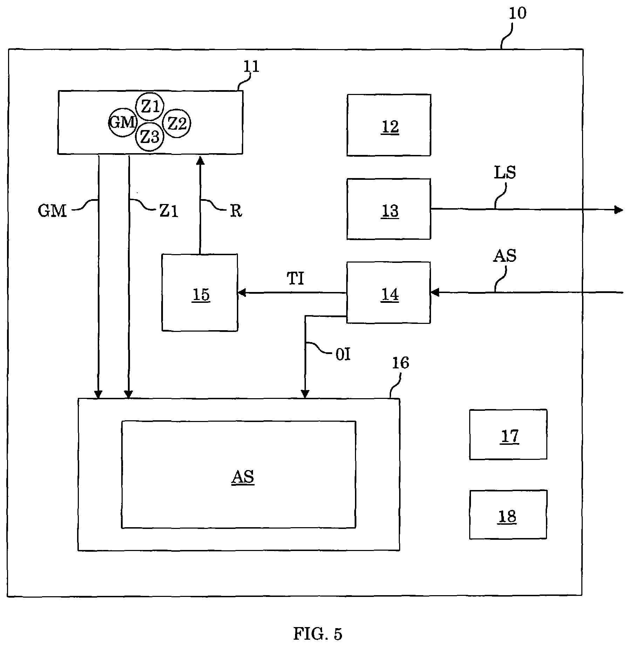

Fig. 5 zeigt ein schematisches Blockschaltbild eines zweiten Ausführungsbeispiels eines Simulators 10 zur Simulation eines Einsatzes eines Flugkörpers eines angreifenden Systems 20 in einem Gefechtsgelände G.

Das zweite Ausführungsbeispiel der Fig. 5 umfasst alle Merkmale des ersten Ausführungsbeispiels des Simulators 10 nach Fig. 1. Darüber hinaus umfasst der Simulator 10 der Fig. 5 eine Einstell-Einheit 17 zum Einstellen einer Ausrichtung des angreifenden Systems 20 in Abhängigkeit der Ortsinformation OI des Antwortsignals AS. Insbesondere kann die Einstell-Einheit 17 die Visierlinie des Flugkörpers des angreifenden Systems 20 mittels der Ortsinformation OI auf das bestimmte Zielobjekt 31 ausrichten.

Für die Ausrichtung des angreifenden Systems 20 auf das bestimmte Zielobjekt 31 nutzt die Einstell-Einheit 17 vorzugsweise neben der Ortsinformation OI des Antwortsignals AS auch einen Abgleich von geometrischen dreidimensionalen Daten aus dem Gelände-Modell GM mit Informationen zumindest einer dem angreifenden System 20 zugeordneten bildgebenden Einrichtung. Wie oben bereits ausgeführt, kann der Flugkörper verschiedene bildgebende Einrichtungen, wie Tagsichtkamera, Wärmebildkamera und/oder Laserscanner, umfassen.

Des Weiteren umfasst der Simulator 10 der Fig. 5 eine Bildverarbeitungs-Einheit 18. Die Bildverarbeitungs-Einheit 18 ist vorzugsweise dazu eingerichtet, signifikante Punkte des bestimmten Zielobjekts 31 in dem von der zumindest einen bildgebenden Einrichtung aufgenommenen Bild oder einer Abfolge von Bildern zu detektieren.

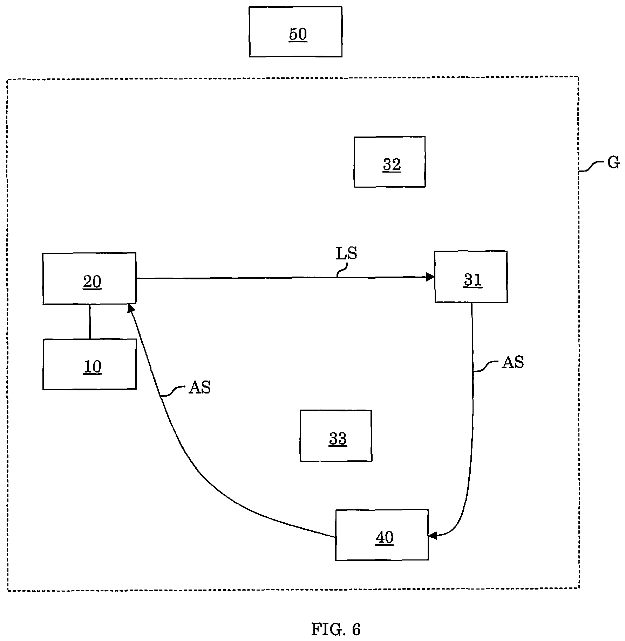

In Fig. 6 ist schematisch ein zweites Beispiel eines Gefechtsgeländes G mit einem Simulator 10 dargestellt. Der Simulator 10 ist beispielsweise gemäß Fig. 1 oder gemäß Fig. 5 ausgebildet. In dem Beispiel der Fig. 6 ist in dem Gefechtsgelände G eine Gefechts-Übungs-Zentrale 40 angeordnet. Alternativ kann die Gefechts-Übungs-Zentrale 40 auch außerhalb des Gefechtsgeländes G angeordnet sein. In dem Beispiel der Fig. 6 wird das Antwortsignal AS nicht direkt von dem antwortenden bestimmten Zielobjekt 31, welches das codierte Lasersignal LS von dem angreifenden System 20 empfangen und ausgewertet hat, zurück an das angreifende System 20 übertragen. In dem Beispiel der Fig. 6 wird das Antwortsignal AS über eine erste Funkstrecke an die Gefechts-Übungs-Zentrale 40 übertragen. Über eine zweite Funkstrecke überträgt dann die Gefechts-Übungs-Zentrale 40 das Antwortsignal AS an das angreifende System 20.

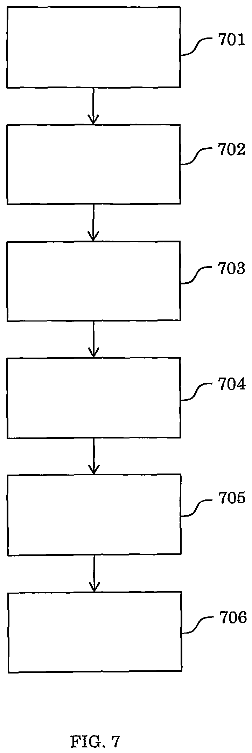

Fig. 7 zeigt ein schematisches Ablaufdiagramm eines Ausführungsbeispiels eines Verfahrens zur Simulation eines Einsatzes eines Flugkörpers eines angreifenden Systems 20 in einem Gefechtsgelände G. Beispiele für das Gefechtsgelände G sind in den Fig. 2 und 6 dargestellt.

Das Verfahren der Fig. 7 umfasst die folgenden Schritt 701 - 706:
In Schritt 701 werden ein Gelände-Modell GM des Gefechtsgeländes G und eine Anzahl von Zielobjekt-Modellen Z1 - Z3 von Zielobjekten 31 - 33 in einer Speichervorrichtung 11 gespeichert (siehe Fig. 1).
In Schritt 702 wird ein bestimmtes Zielobjekt, beispielsweise das Zielobjekt 31 (siehe Fig. 2), der Zielobjekte 31 - 33 in dem Gefechtsgelände G erfasst und verfolgt.
In Schritt 703 wird ein codiertes Lasersignal LS von einer dem angreifenden System 20 zugeordneten Sende-Einheit 13 (siehe Fig. 1) an das bestimmte Zielobjekt 31 gesendet. Das codierte Lasersignal LS umfasst zumindest eine Identifikation ID des angreifenden Systems 20.
In Schritt 704 wird ein von dem bestimmten Zielobjekt 31 als Antwort auf das Lasersignal LS gesendetes Antwortsignal AS durch eine dem angreifenden System 20 zugeordnete Empfangs-Einheit 14 empfangen. Das Antwortsignal AS umfasst zumindest eine Ortsinformation OI oder Position des bestimmten Zielobjekts 31 und eine Typinformation TI des bestimmten Zielobjekts 31.
In Schritt 705 wird ein in der Speichervorrichtung 11 gespeichertes Zielobjekt-Modell Z1 für das bestimmte Zielobjekt 31 in Abhängigkeit von zumindest der Typinformation TI des empfangenen Antwortsignals AS bereitgestellt.
In Schritt 706 wird eine aktuelle Sichtdarstellung des Gefechtsgeländes GM für den Benutzer, beispielsweise einen übenden Soldaten, unter Verwendung des Gelände-Modells GM, des bereitgestellten Zielobjekt-Modells Z1 und der Ortsinformation OI des Antwortsignals AS mittels eines dem angreifenden System 20 zugeordneten Sichtmittels 16 (siehe Fig. 1) ausgegeben. Die Ausgabe umfasst insbesondere eine visuelle und zusätzlich eine Audio-Ausgabe.

Obwohl die vorliegende Erfindung anhand von Ausführungsbeispielen beschrieben wurde, ist sie vielfältig modifizierbar.

### BEZUGSZEICHENLISTE

- 10: Simulator
- 20: angreifendes System
- 31 - 33: Zielobjekt
- 11: Speichervorrichtung
- 12: Erfassungs-Einheit
- 13: Sende-Einheit
- 14: Empfangs-Einheit
- 15: Bereitstellungs-Einheit
- 16: Sichtmittel
- 17: Einstell-Einheit
- 18: Bildverarbeitungs-Einheit
- 31 - 33: Zielobjekt
- 40: Gefechts-Übungs-Zentrale
- 50: Ortungssystem
- 701 - 706: Verfahrensschritte

- AS: Antwortsignal
- BV: Bewegungsvektor
- G: Gefechtsgelände
- GM: Gelände-Modell
- ID: Identifikation
- LS: Lasersignal
- MA: Munitionsart
- OI: Ortsinformation
- R: Anfrage
- TI: Typinformation
- Z1 - Z3: Zielobjekt-Modell

## Patentansprüche

1. Vorrichtung aufweisend ein angreifendes System (20), das einen Flugkörper umfasst, (20) und einen Simulator (10) zur Simulation eines Einsatzes des Flugkörpers des angreifenden Systems (20) in einem Gefechtsgelände (G), der Simulator (10) mit:
einer Speichervorrichtung (11), eingerichtet zum Speichern zumindest eines Gelände-Modells (GM) zumindest eines realen Gefechtsgeländes (G) und einer Anzahl von Zielobjekt-Modellen (Z1 - Z3) von realen Zielobjekten (31 - 33),
einer dem angreifenden System (20) zugeordneten Erfassungs-Einheit (12), eingerichtet zum Erfassen und Verfolgen eines bestimmten Zielobjekts (31) der realen Zielobjekte (31 - 33) in dem realen Gefechtsgelände (G), **dadurch gekennzeichnet, dass** der Simulator (10) ferner aufweist:
einer dem angreifenden System (20) zugeordneten Sende-Einheit (13), eingerichtet zum Senden eines codierten Lasersignals (LS) an das bestimmte Zielobjekt (31), wobei das codierte Lasersignal (LS) zumindest eine Identifikation (ID) des angreifenden Systems (20) umfasst,
einer dem angreifenden System (20) zugeordneten Empfangs-Einheit (14), eingerichtet zum Empfangen eines von dem bestimmten Zielobjekt (31) als Antwort auf das Lasersignal (LS) gesendeten Antwortsignals (AS), welches zumindest eine Ortinformation (OI) und eine Typinformation (TI) des bestimmten Zielobjekts (31) umfasst,
einer Bereitstellungs-Einheit (15), eingerichtet zum Bereitstellen eines in der Speichervorrichtung (11) gespeicherten Zielobjekt-Modells (Z1) für das bestimmte Zielobjekt (31) in Abhängigkeit zumindest der Typinformation (TI) des empfangenen Antwortsignals (AS), und
einem dem angreifenden System (20) zugeordneten Sichtmittel (16), eingerichtet zur Ausgabe einer aktuellen Sichtdarstellung des realen Gefechtsgeländes (G) unter Verwendung des Gelände-Modells (GM), des bereitgestellten Zielobjekt-Modells (Z1) und der Ortsinformation (OI) des Antwortsignals (AS).

2. Vorrichtung nach Anspruch 1,
**dadurch gekennzeichnet,**
**dass** das Sichtmittel (16) dazu eingerichtet ist, eine reale Sichtdarstellung des Gefechtsgeländes (G) sowie eine virtuelle Sichtdarstellung des Gefechtsgeländes (G) auszugeben.

3. Vorrichtung nach Anspruch 2,
**dadurch gekennzeichnet,**
**dass** das Sichtmittel (16) dazu eingerichtet ist, im Moment eines Abschießens des Flugkörpers von der realen Sichtdarstellung auf die virtuelle Sichtdarstellung umzuschalten.

4. Vorrichtung nach einem der Ansprüche 1 bis 3,
**dadurch gekennzeichnet,**
**dass** das codierte Lasersignal (LS) die Identifikation (ID) des angreifenden Systems (20) und eine Munitionsart (MA) des Flugkörpers des angreifenden Systems (20) umfasst.

5. Vorrichtung nach einem der Ansprüche 1 bis 4,
**dadurch gekennzeichnet,**
**dass** das Antwortsignal (AS) die Ortsinformation (OI) des bestimmten Zielobjekts (31), die Typinformation (TI) des bestimmten Zielobjekts (31) und einen Bewegungsvektor (BV) des bestimmten Zielobjekts (31) umfasst.

6. Vorrichtung nach einem der Ansprüche 1 bis 5,
**gekennzeichnet durch**
eine Einstell-Einheit (17) zum Einstellen einer Ausrichtung des angreifenden Systems (20) in Abhängigkeit der Ortsinformation (OI) des Antwortsignals (AS).

7. Vorrichtung nach Anspruch 6,
**dadurch gekennzeichnet,**
**dass** die Einstell-Einheit (17) dazu eingerichtet ist, die Ausrichtung des angreifenden Systems (20) in Abhängigkeit von der Ortsinformation (OI) des Antwortsignals (AS) und einem Abgleich von geometrischen dreidimensionalen Daten aus dem Gelände-Modell (GM) mit Informationen zumindest einer dem angreifenden System (20) zugeordneten bildgebenden Einrichtung einzustellen.

8. Vorrichtung nach einem der Ansprüche 1 bis 7,
**gekennzeichnet durch**
zumindest eine bildgebende Einrichtung zum Aufnehmen zumindest eines Bilds des Gefechtsgeländes (GM).

9. Vorrichtung nach Anspruch 8,
**dadurch gekennzeichnet,**
**dass** die zumindest eine bildgebende Einrichtung eine Tagsichtkamera, eine Wärmebildkamera und/oder einen Laserscanner umfasst.

10. Vorrichtung nach Anspruch 8 oder 9,
**gekennzeichnet durch**
eine Bildverarbeitungs-Einheit (18) zum Detektieren von signifikanten Punkten des bestimmten Zielobjekts (31) in dem von der zumindest einen bildgebenden Einrichtung aufgenommen Bild.

11. Vorrichtung nach einem der Ansprüche 1 bis 10,
**dadurch gekennzeichnet,**
**dass** die Empfangs-Einheit (12) dazu eingerichtet ist, das Antwortsignal (AS) direkt von dem bestimmten Zielobjekt (31) zu empfangen.

12. Vorrichtung nach einem der Ansprüche 1 bis 10,
**dadurch gekennzeichnet,**
**dass** die Empfangs-Einheit (12) dazu eingerichtet ist, das von dem bestimmten Zielobjekt (31) gesendete Antwortsignal (AS) über eine Gefechts-Übungs-Zentrale (40) zu empfangen.

13. Verfahren zur Simulation eines Einsatzes eines Flugkörpers eines angreifenden Systems (20) in einem Gefechtsgelände (G), mit:
a) Speichern (701) zumindest eines Gelände-Modells (GM) zumindest eines realen Gefechtsgeländes (G) und einer Anzahl von Zielobjekt-Modellen (Z1 - Z3) von realen Zielobjekten (31 - 33) in einer Speichervorrichtung (11),
b) Erfassen (702) und Verfolgen eines bestimmten Zielobjekts (31) der realen Zielobjekte (31 - 33) in dem realen Gefechtsgelände (G) durch eine dem angreifenden System (20) zugeordneten Erfassungs-Einheit (12), **dadurch gekennzeichnet, dass** das Verfahren ferner aufweist:
c) Senden (703) eines codierten Lasersignals (LS) von einer dem angreifenden System (20) zugeordneten Sende-Einheit (13) an das bestimmte Zielobjekt (31), wobei das codierte Lasersignal (LS) zumindest eine Identifikation (ID) des angreifenden Systems (20) umfasst,
d) Empfangen (704) eines von dem bestimmten Zielobjekt (31) als Antwort auf das Lasersignal (LS) gesendeten Antwortsignals (AS) durch eine dem angreifenden System (20) zugeordnete Empfangs-Einheit (14), wobei das Antwortsignal (AS) zumindest eine Ortinformation (OI) und eine Typinformation (TI) des bestimmten Zielobjekts (31) umfasst,
e) Bereitstellen (705) eines in der Speichervorrichtung (11) gespeicherten Zielobjekt-Modells (Z1) für das bestimmte Zielobjekt (31) in Abhängigkeit zumindest der Typinformation (TI) des empfangenen Antwortsignals (AS), und
f) Ausgeben (706) einer aktuellen Sichtdarstellung des realen Gefechtsgeländes (G) unter Verwendung des Gelände-Modells (GM), des bereitgestellten Zielobjekt-Modells (Z1) und der Ortsinformation (OI) des Antwortsignals (AS) mittels eines dem angreifenden System (20) zugeordneten Sichtmittels (16).

14. Computerprogrammprodukt, umfassend Befehle, die bewirken, dass die Vorrichtung nach Anspruch 1 die Verfahrensschritte nach Anspruch 13 ausführt.

## Claims

1. Apparatus having an attacking system (20), which comprises a missile (20), and a simulator (10) for simulating an operation of the missile of the attacking system (20) in a combat terrain (G), the simulator (10) comprising:
a storage apparatus (11), configured to store at least one terrain model (GM) of at least one real combat terrain (G) and a number of target object models (Z1 - Z3) of real target objects (31 - 33),
a detection unit (12) associated with the attacking system (20), configured to detect and track a specific target object (31) of the real target objects (31 - 33) in the real combat terrain (G), **characterized in that** the simulator (10) further comprises:
a transmission unit (13) associated with the attacking system (20), configured to transmit a coded laser signal (LS) to the specific target object (31), wherein the coded laser signal (LS) comprises at least one identification (ID) of the attacking system (20),
a reception unit (14) associated with the attacking system (20), configured to receive a response signal (AS) transmitted by the specific target object (31) in response to the laser signal (LS), which comprises at least one item of location information (OI) and one item of type information (TI) of the specific target object (31),
a provision unit (15), configured to provide a target object model (Z1) stored in the storage apparatus (11) for the specific target object (31), dependent on at least of the type information (TI) of the received response signal (AS), and
a visual means (16) associated with the attacking system (20), configured to output a current visual representation of the real combat terrain (G) using the terrain model (GM), the provided target object model (Z1) and the location information (OI) of the response signal (AS).

2. Apparatus according to Claim 1,
**characterized in that**
the visual means (16) is configured to output a real visual representation of the combat terrain (G) and a virtual visual representation of the combat terrain (G).

3. Apparatus according to Claim 2,
**characterized in that**
the visual means (16) is configured to switch from the real visual representation to the virtual visual representation at the moment of launching of the missile.

4. Apparatus according to one of Claims 1 to 3,
**characterized in that**
the coded laser signal (LS) comprises the identification (ID) of the attacking system (20) and a munition type (MA) of the missile of the attacking system (20).

5. Apparatus according to one of Claims 1 to 4,
**characterized in that**
the response signal (AS) comprises the location information (OI) of the specific target object (31), the type information (TI) of the specific target object (31) and a movement vector (BV) of the specific target object (31).

6. Apparatus according to one of Claims 1 to 5,
**characterized by**
an adjustment unit (17) for adjusting an orientation of the attacking system (20) dependent on the location information (OI) of the response signal (AS).

7. Apparatus according to Claim 6,
**characterized in that**
the adjustment unit (17) is configured to adjust the orientation of the attacking system (20) dependent on the location information (OI) of the response signal (AS) and a comparison of geometrical three-dimensional data from the terrain model (GM) with information of at least one imaging device associated with the attacking system (20).

8. Apparatus according to one of Claims 1 to 7,
**characterized by**
at least one imaging device for recording at least one image of the combat terrain (GM).

9. Apparatus according to Claim 8,
**characterized in that**
the at least one imaging device comprises a daytime camera, a thermal imaging camera and/or a laser scanner.

10. Apparatus according to Claim 8 or 9,
**characterized by**
an image processing unit (18) for detecting significant points of the specific target object (31) in the image recorded by the at least one imaging device.

11. Apparatus according to one of Claims 1 to 10,
**characterized in that**
the reception unit (12) is configured to receive the response signal (AS) directly from the specific target object (31).

12. Apparatus according to one of Claims 1 to 10,
**characterized in that**
the reception unit (12) is configured to receive the response signal (AS) transmitted by the specific target object (31) via a combat training centre (40).

13. Method for simulating an operation of a missile of an attacking system (20) in a combat terrain (G), comprising:
a) storing (701) at least one terrain model (GM) of at least one real combat terrain (G) and a number of target object models (Z1 - Z3) of real target objects (31 - 33) in a storage apparatus (11),
b) detecting (702) and tracking a specific target object (31) of the real target objects (31 - 33) in the real combat terrain (G) by a detection unit (12) associated with the attacking system (20), **characterized in that** the method further comprises:
c) transmitting (703) a coded laser signal (LS) from a transmission unit (13) associated with the attacking system (20) to the specific target object (31), wherein the coded laser signal (LS) comprises at least one identification (ID) of the attacking system (20),
d) receiving (704) a response signal (AS) transmitted by the specific target object (31) in response to the laser signal (LS) by a reception unit (14) associated with the attacking system (20), wherein the response signal (AS) comprises at least one item of location information (OI) and one item of type information (TI) of the specific target object (31),
e) providing (705) a target object model (Z1) stored in the storage apparatus (11) for the specific target object (31), dependent on at least the type information (TI) of the received response signal (AS), and
f) outputting (706) a current visual representation of the real combat terrain (G) using the terrain model (GM), the provided target object model (Z1) and the location information (OI) of the response signal (AS) by means of a visual means (16) associated with the attacking system (20).

14. Computer program product, comprising commands which cause the apparatus according to Claim 1 to carry out the method steps according to Claim 13.

## Revendications

1. Appareil ayant un système d'attaque (20), qui comprend un missile (20), et un simulateur (10) pour simuler un fonctionnement du missile du système d'attaque (20) dans un terrain de combat (G), le simulateur (10) comprenant :
un appareil de stockage (11), configuré pour stocker au moins un modèle de terrain (GM) d'au moins un terrain de combat réel (G) et un certain nombre de modèles d'objets cibles (Z1 - Z3) d'objets cibles réels (31 - 33),
une unité de détection (12) associée au système d'attaque (20), configurée pour détecter et suivre un objet cible spécifique (31) des objets cibles réels (31 - 33) dans le terrain de combat réel (G), **caractérisé en ce que** le simulateur (10) comprend en outre :
une unité de transmission (13) associée au système d'attaque (20), configurée pour transmettre un signal laser codé (LS) à l'objet cible spécifique (31), dans lequelle signal laser codé (LS) comprend au moins une identification (ID) du système d'attaque (20),
une unité de réception (14) associée au système d'attaque (20), configurée pour recevoir un signal de réponse (AS) transmis par l'objet cible spécifique (31) en réponse au signal laser (LS), qui comprend au moins une information de localisation (OI) et une information de type (TI) de l'objet cible spécifique (31),
une unité de mise à disposition (15), configurée pour mettre à disposition un modèle d'objet cible (Z1) stocké dans l'appareil de stockage (11) pour l'objet cible spécifique (31), en fonction au moins de l'information de type (TI) du signal de réponse reçu (AS), et
un moyen de vision (16) associé au système d'attaque (20), configuré pour sortir une représentation visuelle actuelle du terrain de combat réel (G) en utilisant le modèle de terrain (GM), le modèle d'objet cible mis à disposition (Z1) et l'information de localisation (OI) du signal de réponse (AS).

2. Dispositif selon la revendication 1,
**caractérisé en ce que**
le moyen de vision (16) est configuré pour sortir une représentation visuelle réelle du terrain de combat (G) et une représentation visuelle virtuelle du terrain de combat (G).

3. Dispositif selon la revendication 2,
**caractérisé en ce que**
le moyen de vision (16) est configuré pour passer de la représentation visuelle réelle à la représentation visuelle virtuelle au moment du lancement du missile.

4. Dispositif selon l'une quelconque des revendications 1 à 3,
**caractérisé en ce que**
le signal laser codé (LS) comprend l'identification (ID) du système d'attaque (20) et un type de munition (MA) du missile du système d'attaque (20).

5. Dispositif selon l'une quelconque des revendications 1 à 4,
**caractérisé en ce que**
le signal de réponse (AS) comprend l'information de localisation (OI) de l'objet cible spécifique (31), l'information de type (TI) de l'objet cible spécifique (31) et un vecteur de mouvement (BV) de l'objet cible spécifique (31).

6. Dispositif selon l'une quelconque des revendications 1 à 5,
**caractérisé par**
une unité de réglage (17) pour régler une orientation du système d'attaque (20) en fonction de l'information de localisation (OI) du signal de réponse (AS).

7. Dispositif selon la revendication 6,
**caractérisé en ce que**
l'unité de réglage (17) est configurée pour régler l'orientation du système d'attaque (20) en fonction de l'information de localisation (OI) du signal de réponse (AS) et d'une comparaison de données géométriques tridimensionnelles du modèle de terrain (GM) avec des informations d'au moins un dispositif d'imagerie associé au système d'attaque (20).

8. Dispositif selon l'une quelconque des revendications 1 à 7,
**caractérisé par**
au moins un dispositif d'imagerie pour enregistrer au moins une image du terrain de combat (GM).

9. Dispositif selon la revendication 8,
**caractérisé en ce que**
l'au moins un dispositif d'imagerie comprend une caméra de jour, une caméra d'imagerie thermique et/ou un scanner laser.

10. Dispositif selon la revendication 8 ou 9,
**caractérisé par**
une unité de traitement d'image (18) pour détecter des points significatifs de l'objet cible spécifique (31) dans l'image enregistrée par l'au moins un dispositif d'imagerie.

11. Dispositif selon l'une quelconque des revendications 1 à 10,
**caractérisé en ce que**
l'unité de réception (12) est configurée pour recevoir le signal de réponse (AS) directement de l'objet cible spécifique (31).

12. Dispositif selon l'une quelconque des revendications 1 à 10,
**caractérisé en ce que**
l'unité de réception (12) est configurée pour recevoir le signal de réponse (AS) transmis par l'objet cible spécifique (31) par le biais d'un centre d'entraînement au combat (40).

13. Procédé pour simuler un fonctionnement d'un missile d'un système d'attaque (20) dans un terrain de combat (G), comprenant :
a) le stockage (701) d'au moins un modèle de terrain (GM) d'au moins un terrain de combat réel (G) et d'un certain nombre de modèles d'objets cibles (Z1 - Z3) d'objets cibles réels (31 - 33) dans un appareil de stockage (11),
b) la détection (702) et le suivi d'un objet cible spécifique (31) des objets cibles réels (31 - 33) dans le terrain de combat réel (G) par une unité de détection (12) associée au système d'attaque (20), **caractérisé en ce que** le procédé comprend en outre :
c) la transmission (703) d'un signal laser codé (LS) d'une unité de transmission (13) associée au système d'attaque (20) à l'objet cible spécifique (31), dans lequelle signal laser codé (LS) comprend au moins une identification (ID) du système d'attaque (20),
d) la réception (704) d'un signal de réponse (AS) transmis par l'objet cible spécifique (31) en réponse au signal laser (LS) par une unité de réception (14) associée au système d'attaque (20), dans lequel le signal de réponse (AS) comprend au moins une information de localisation (OI) et une information de type (TI) de l'objet cible spécifique (31),
e) la mise à disposition (705) d'un modèle d'objet cible (Z1) stocké dans l'appareil de stockage (11) pour l'objet cible spécifique (31), en fonction au moins de l'information de type (TI) du signal de réponse reçu (AS), et
f) la sortie (706) d'une représentation visuelle actuelle du terrain de combat réel (G) en utilisant le modèle de terrain (GM), le modèle d'objet cible mis à disposition (Z1) et l'information de localisation (OI) du signal de réponse (AS) au moyen d'un moyen de vision (16) associé au système d'attaque (20).

14. Produit de programme informatique, comprenant des instructions qui amènent le dispositif selon la revendication 1 à mettre en œuvre les étapes de procédé selon la revendication 13.
